# EUROPEAN PATENT SPECIFICATION

(11) **EP 2 168 029 B1**
(45) Date of publication and mention of the grant of the patent: **25.10.2017**
(21) Application number: 07849473.9
(22) Date of filing: 13.12.2007
(51) Int. Cl.: G06F 3/02, G06F 3/023

(54) **DEVICE HAVING PRECISION INPUT CAPABILITY**
EINRICHTUNG MIT PRÄZISIONSEINGABEFÄHIGKEIT
DISPOSITIF AYANT UNE CAPACITÉ D'ENTRÉE DE PRÉCISION

(30) Priority: 15.06.2007 US 763598
(43) Date of publication of application: 31.03.2010
(73) Proprietor: Sony Ericsson Mobile Communications AB, 221 88 Lund (SE)
(72) Inventor: HOLMBERG, Per, 240 10 Dalby (SE); BENGTSSON, Henrik, 227 38 Lund (SE)
(74) Representative: Valea AB
(86) International application number: PCT/IB2007/055089
(87) International publication number: WO 2008/152458

(56) References cited:
- GB-A- 2 402 105
- US-A- 5 313 027
- US-A1- 2002 196 238
- US-A1- 2003 208 324

## Description

### BACKGROUND

The proliferation of devices, such as hand-held, portable, and stationary devices, has grown tremendously within the past decade. Although variations exist, many of these devices include some form of input device, such as a keypad, a QWERTY keyboard, or a display (e.g., a touch screen). Depending on the size of the device and the dexterity of a user of the device, inputting information into the device may be problematic. For example, individual keys of the keypad/keyboard, or an icon displayed by the display may be small in comparison to the user's finger or a stylus. Additionally, the user may not be looking at the input device when inputting information but, rather, relying on his/her sense of touch and/or familiarity with the input device. Document D1 (GB 2 402 10 A) shows a keypad in which the confirmation of a key input selection (a first sensitivity activation) is effected by the surpassing of a second sensitivity level mechanism provided for all inputs by a single switch under the touch screen.

### SUMMARY

According to one aspect, an input device may include input keys, where each key has associated with it a first sensitivity, a second sensitivity, and an input information, and key registration logic that includes logic to detect a first stimulus that corresponds to the first sensitivity of a first key of the input keys, logic to register the first key when the first stimulus corresponding to the first sensitivity of the first key is detected, logic to detect a second stimulus that corresponds to the second sensitivity and logic to input the input information corresponding to the first key when the second stimulus corresponding to the second sensitivity is detected, wherein the second stimulus is of a second key that is a different key than the first key, and wherein the input information corresponding to the first key is consecutively input again, without re-registering the first key, when the second stimulus is consecutively detected again. According to another aspect, a method may include registering a first key of an input device when a first stimulus corresponding to a first sensitivity of the first key is detected, providing an indication that the first key is registered, and inputting information associated with the first key when a second stimulus corresponding to a second sensitivity of a second key of the input device is detected, wherein the second key is a different key than the first key, and wherein the input information corresponding to the first key is consecutively input again, without re-registering the first key, when the second stimulus is consecutively detected again. Preferable embodiments of the invention are defined in the dependent claims.

### BRIEF DESCRIPTION OF THE DRAWINGS

The accompanying drawings, which are incorporated in and constitute a part of this specification, illustrate one or more examples described herein and, together with the description, explain these examples. In the drawings:
Fig. 1 is an external front view of an exemplary device with precision input capability;
Fig. 2 is a diagram of exemplary components of the device of Fig. 1;
Fig. 3 depicts a flow chart of a first exemplary process for permitting precision input into a device based on single key registration with one eligible input;
Fig. 4 depicts a flow chart of a second exemplary process for permitting precision input into a device; and
Figs. 5a - 5g are diagrams illustrating exemplary processes for providing precision input capability from a user's perspective.

### DETAILED DESCRIPTION

The following detailed description refers to the accompanying drawings. The same reference numbers in different drawings may identify the same or similar elements. Also, the following detailed description does not limit the invention.

### OVERVIEW

Implementations described herein provide a device with precision input capability. An input device of the device may include, for example, a keypad or a QWERTY keyboard. Alternatively, or additionally, the input device may include a display that can by used as an input device (e.g., a touch screen). The device's precision input capability may be based on a two-phase process where a first phase includes registering a key and a second phase includes entering an input corresponding to the registered key into the device.

In one implementation, the first phase may include a key registration phase. A key, as used herein, may include any component for inputting information into the device, such as a key of a keypad, a function key, a button, a key of a QWERTY keyboard, and/or an icon, an object or virtual key displayed on the display. The key registration phase may include a user of the input device registering a key by utilizing an instrument, such as the user's finger/fingernail, a stylus, or some other object. In other words, the user may utilize the instrument to create/generate a stimulus that corresponds to a first sensitivity of a key of the input device. In one implementation, the first sensitivity of the key may include a touch sensitivity and the user may register a key by touching the key with the instrument (e.g., lightly touching the key). The device and/or the input device may then provide indication to the user that the key is registered. The key registration phase may include a latest key registration, as will be discussed in greater detail below.

The second phase may include entering an input corresponding to the registered key into the device. Similar to the first phase, the user may utilize the instrument to create/generate a stimulus that corresponds to a second sensitivity of a key of the input device. In one implementation, the second sensitivity of the key may include a pressure sensitivity and the user may enter an input corresponding to the registered key by pressing any key of the input device with the instrument (e.g., applying pressure to depress the key).

### EXEMPLARY DEVICE

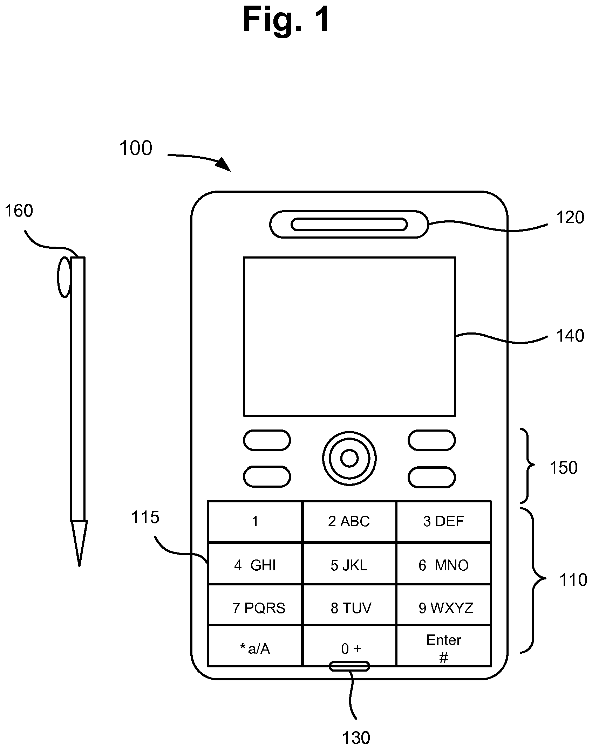

Fig. 1 illustrates an external front view of an exemplary device 100 having precision input capability. Device 100 may include any type of electronic device that includes a user input device and that may be portable or stationary. For example, device 100 may include a telephone, a cellular radiotelephone, a Personal Communications System (PCS) terminal, an audio-visual (AV) player/recorder device, an image capturing device, a personal digital assistant (PDA), or a laptop or palmtop computer. A PCS terminal may combine a cellular radiotelephone with data processing, facsimile and data communications capabilities. A PDA may include a radiotelephone, a pager, Internet/intranet access, a web browser, an organizer, calendars and/or a global positioning system (GPS) receiver. Device 100 may be referred to as a "pervasive computing" device. In some implementations, the user input device of device 100 may be an integral component of device 100. In other implementations, the user input device may be physically separate from device 100 (e.g., a computer being physically separate from a display and a QWERTY keyboard).

As shown in the external front view of Fig. 1, device 100 may include a keypad 110, an overlay 115, a speaker 120, a microphone 130, a display 140, control buttons 150, and a stylus 160. Device 100 may include fewer, additional, or different external components than those illustrated in FIG. 1, and/or the components may be arranged differently than is illustrated in Fig. 1.

As previously discussed above, precision input capability as described herein may include a two phase process. The first phase may use a first sensitivity of a key and the second phase may use a second sensitivity of the key. "Sensitivity", as used herein, is intended to be broadly interpreted to include any type or form of receptiveness to a stimulus. In one implementation, the first sensitivity and the second sensitivity may be different from each other. For example, the first sensitivity of a key may be a touch sensitivity (e.g., sensitive to a light touching of the key), and the second sensitivity of a key may be a pressure sensitivity (e.g., sensitive to the application of pressure to depress the key). In another implementation, a first sensitivity and a second sensitivity may be the same. For example, the first sensitivity of a key may be a pressure sensitivity and the second sensitivity of a key may also be a pressure sensitivity. As will be discussed in greater detail below, the first phase may permit a user to register a key when the first sensitivity of a key is stimulated, and the second phase may permit the user to enter an input associated with the registered key when the second sensitivity of a key is stimulated.

Keypad 110 may include any type of component or device capable of providing input to device 100. Keypad 110 may include a standard telephone keypad and/or a set of function keys. In one implementation, each key of keypad 110 may be, for example, a pushbutton. A user may utilize keypad 110 for entering information, such as text, phone numbers, or selecting a function.

Overlay 115 may include a layer that is sensitive to a stimulus. In one implementation, overlay 115 may include an array of sensors which may be capacitive, resistive and/or conductive. Overlay 115 may be transparent and may be on keypad 110 and/or control buttons 150. In one implementation, overlay 115 may be touch-sensitive. Overlay 115 may output indications as to a location of the stimulus (e.g., a location of an instrument touching a surface of overlay 115) and a surface area of the stimulus. Overlay 115 may have single-point or multipoint sensing capabilities.

Speaker 120 may include any component capable of providing sound. Microphone 130 may include any component capable of sensing sound.

Display 140 may include any component capable of providing visual information. Display 140 may be utilized to display, for example, text, images, and/or video. Additionally, display 140 may be utilized as an input device. Display 140 may include a sensitive surface (e.g., pressure-sensitive, acoustically sensitive, photosensitive, or electrically sensitive) to permit interaction with an instrument. The sensing capabilities of display 140 may be single point or multipoint. In one implementation, display 140 may include a touch sensitive surface (e.g., sensitive to a light touch) and a pressure sensitive surface (e.g., sensitive to applied pressure).

Control buttons 150 may include any component that permits the user to interact with device 100 to cause device 100 to perform one or more operations, such as placing a phone call or playing various media. In one implementation, each key of control buttons 150 may be a pushbutton type.

Stylus 160 may include any instrument that may be used to manipulate various components of device 100, such as display 140, keypad 110, overlay 115, or control buttons 150. In one implementation, stylus 160 may be a pointer or an inkless pen that may be used to "write" information onto or select information from graphics displayed on display 140. The type of stylus may depend on the type of surface sensitivity employed. Stylus 160 may emit a stimulus, such as a charge, an acoustic wave, or a light, to facilitate interaction between the user and display 140.

As described above, device 100 may include two input mechanisms that provide precision input capability. The first input mechanism may be keypad 110 and/or control buttons 150 in combination with overlay 115. The second input mechanism may be display 140. In one implementation, overlay 115 may provide a first sensitivity relating to the first phase, and a key of keypad 110 and/or control buttons 150 may provide a second sensitivity relating to the second phase. For example, the first sensitivity of a key of the first input mechanism may be a touch sensitivity of overlay 115, and the second sensitivity of a key of the first input mechanism may be a pressure sensitivity of a key of keypad 110 and/or control buttons 150. As another example, the first sensitivity of a key of the second input mechanism (i.e., display 140) may be a touch sensitivity, and the second sensitivity of a key may be a pressure sensitivity.

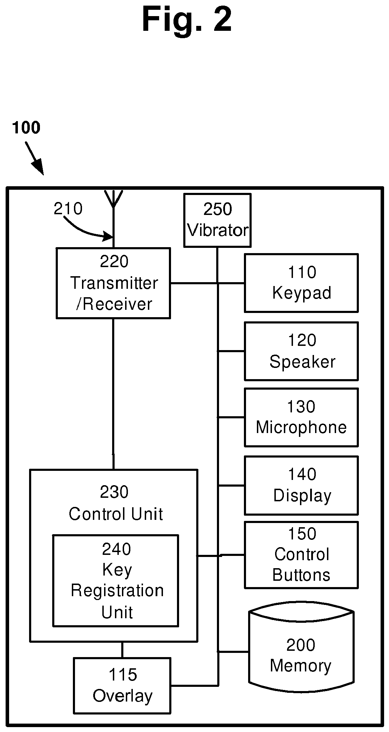

Fig. 2 illustrates exemplary internal components of device 100. As illustrated in Fig. 2, device 100 may include keypad 110, speaker 120, microphone 130, display 140, control buttons 150, overlay 115, a memory 200, a transmitter, receiver or transceiver 220, a control unit 230, a key registration unit 250, and a vibrator 250. Device 100 may include fewer, additional, and/or different components. The components of device 100 may be arranged differently than the components depicted in Fig. 2.

Memory 200 may include any type of storing component. For example, memory 200 may include a memory component, such as a random access memory (RAM), a read only memory (ROM), and/or a programmable read only memory (PROM). Alternatively, or additionally, memory 200 may include a removable or non-removable storage component, such as an optical storage (e.g., a CD), a magnetic storage (e.g., a hard drive), a flash memory, or a computer-readable medium. The computer-readable medium may be any component that stores (permanently, transitorily, or otherwise) information readable by a device. The computer-readable medium may include a physical or a logical memory device and/or a carrier wave. Memory 200 may store data and instructions related to the operation and use of device 100.

Transceiver 220 may include any component for enabling communication with, for example, a network or another device. In some implementations, transceiver 220 may include an antenna. Control unit 230 may include any logic that may interpret and execute instructions. Logic, as used herein, may include hardware (e.g., an application specific integrated circuit (ASIC), a field programmable gate array (FPGA), etc.), software, a combination of software and hardware, and/or a hybrid architecture. Control unit 230 may include, for example, a microprocessor, a data processor, a co-processor, and/or a network processor. Control unit 230 may access instructions from memory 200, from other components of device 100, and/or from a source external to device 100 (e.g., a network or another device). Control unit 230 may control the operation of device 100.

Key registration unit 240 may include any logic that detects an indication (e.g., an output) associated with the operation of, for example, keypad 110, overlay 115, control buttons 150, and/or display 140. Key registration unit 240 may be implemented employing hardware, software, a combination of hardware and software, and/or a hybrid architecture. Key registration unit 240 may access instructions from memory 200, from other components of device 100, or from a source external to device 100 (e.g., a network or another device).

It is to be understood that key registration unit 240 may be implemented in a number of ways to achieve key registration features. Accordingly, the implementations described below are exemplary in nature, and fewer, additional, or different components and/or processes may be employed to realize key registration features.

In one implementation, key registration unit 240 may detect an indication from overlay 115 or display 140 that a user has touched overlay 115 or display 140 with an instrument (e.g., a user's finger/fingernail, stylus 160, and/or some other object), and may determine a location of the touch on overlay 115 or display 140. Key registration unit 240 may utilize the recognition of touch and location information to register, for example, a key of keypad 110, a key of control buttons 150, or an icon displayed by display 140. "Register", as used herein, is intended to be interpreted broadly, and to include any recognition that a first sensitivity of a key is sufficiently stimulated.

In one implementation, registering a key may include key registration unit 240 providing the user an indication that the first sensitivity of a key has been stimulated. For example, the identification of a registered key may be communicated to the user, for example, visually on display 140, auditorily from speaker 120, and/or tactilely through keypad 110, control buttons 150, and/or through display 140, by vibrator 250. Thus, for example, key registration unit 240 may store a value in memory 200 so that the identification of the registered key may be displayed on display 140,

When the key is registered, the user may press, for example, the registered key or any other key, to enter an input associated with the registered key into device 100. For example, the input entered may be communicated to the user visually on display 140, auditorily from speaker 120, and/or tactilely through keypad 110, control buttons 150 and/or through display 140, by vibrator 250. In this way, entering information into device 100 may be a two phase process.

Some keys may have more than one eligible input, for example, one key of keypad 110 has the eligible inputs of the number "2" and the letters "A", "B", and "C". Thus, in one implementation, for example, key registration unit 240 may acquire information associated with the operational mode of device 100 and/or the device feature(s) accessed by the user to determine the eligible inputs associated with a key during any given instant.

In one implementation, key registration unit 240 may include certain criteria to determine whether to register a key. For example, the satisfaction of at least one of the criterion may be relied on to determine whether to register a key. As one example, key registration unit 240 may consider the surface area of overlay 115 or display 140 being touched in relation to a position of an underlying key. As another example, a threshold value, such as at least sixty-percent (60%) of the underlying key must be touched to register the underlying key. This criterion may be applicable when the user may be touching between two keys. Alternatively, or additionally, the length of time overlay 115 or display 140 is touched corresponding to the position of the underlying key may be a determinant for registering a key. For example, a threshold value of time (e.g., .25 seconds) that a user's instrument is in contact within a region corresponding to the position of the underlying key may be employed. In this way, a user may skim the surface of overlay 115 or display 140 with an instrument without registering an underlying key, since the contact time may be below the threshold value of time. Alternatively, or additionally, in this way, a user may register a key even though the instrument (e.g., a user's fingernail) does not touch at least sixty-percent (60%) of the underlying key because the instrument contacts the region corresponding to the underlying key for a time equal to or greater than the threshold value time.

In some cases, only one key may be registered during any instant. In accordance with such an implementation, a subsequent registration of a key may delete a previous registration of a key. In other cases, more than one key may be registered during any instant, as will be discussed in greater detail below. Thus, in one implementation, overlay 115 of device 100 may detect whether the user is using, for example, one or two fingers on keypad 110 and correspondingly provide that either one key may be registered during any instant, or that more than one key may be registered during any instant.

In accordance with a single key registration, after a key is registered, the user may enter an input associated with the registered key. For example, the user may press the registered key. As another example, the user may press any key to enter the input associated with the registered key. The criterion or criteria that determine(s) whether to register a key may be distinguishable from when the user presses another key to enter the input associated with the registered key. In one implementation, the threshold length of time of the touch stimulus may be longer for registration purposes. In another implementation, the required pressure to enter the input may be greater than a pressure applied when the user touches a key. In yet another implementation, the user may press a designated key (e.g., an ENTER key) to enter the input corresponding to the registered key. For example, the designated key may never be a registered key. Key registration unit 240 may detect a threshold value of pressure in order to determine that a key is pressed. In a further implementation, mechanical and/or electronic criterion associated with keypad 110 and control buttons 150 (e.g., a contact pad) may provide output to key registration unit 240 indicating that a key is pressed and/or in a depressed position. Display 140 may also employ similar criteria and indications to key registration unit 240.

In some instances, a user may not wish to enter an input corresponding to a registered key, and may proceed to register a different key. In other words, key registration unit 240 may operate in accordance with a latest key registration. For example, if the user registers the "1" key of keypad 110, but really wants to input the "3" key, the user may register the "3" key. So, for example, when the user touches the "3" key, the "1" key may no longer be registered. Thus, when the "3" key is registered, the user may press, for example, any key to enter the "3" key as input, such as the registered key or another key.

Additionally, in one implementation, for example, when the user wants to enter the same key twice, the user may need to register that key only once. For example, when the user registers the "3" key, the user may press the "3" key twice so as to enter the "3" key as input. That is, the user may be able to enter another "3" without having to re-register the "3" key after the first press.

In other instances, there may be more than one eligible input associated with the registered key. Key registration unit 240 may indicate to the user that such a key is registered in a number of different ways. For example, keypad 110 or a virtual telephone keypad on display 140 may include multiple eligible inputs for each key when device 100 operates in text mode. For example, the "2" key, when operated in text mode may include the letters "A", "B", and "C", as eligible inputs. In one implementation, key registration unit 240 may display any one of the letters based on various criteria, such as, for example, the previous letter input, word recognition, and/or most likely letter.

As discussed above, the user may register more than one key at a time. For example, the user may be using more than one finger (e.g., two fingers) on keypad 110, control buttons 150 or display 140. The identification of the registered keys may be communicated to the user, for example, visually, auditorily, and/or tactilely. In one implementation, for example, the latest two keys touched by the user may be registered. There are various ways in determining which key to enter as input when multiple keys are registered.

In one implementation, the user may press the registered key to enter the input associated with that registered key. Alternatively, or additionally, the location of a pressed key in relation to the registered key may determine which registered key may be entered as input. For example, when the user registers both the "1" key and the "3" key of keypad 110, and the user presses the "4" key, the "1" key may be entered as input, since the "4" key is closer in proximity to the registered "1" key than to the registered "3" key.

In still another implementation, more than two keys may be registered. For example, when a QWERTY keyboard is employed, three or more keys may be registered. In a similar implementation as described above, a series of registered keys may be indicated to the user and the user may enter the input corresponding to the registered keys.

Key registration unit 240 may operate similar to the above in relation to display 140. The identification of a registered key(s), an object(s), and/or an icon(s) may be communicated to the user, for example, visually on display 140, auditorily from speaker 120, and/or tactilely (e.g., vibration) in device 100. The user may, for example, press display 140 to enter an input corresponding to a registered key.

Vibrator 250 may include any component capable of providing a tactile stimulus. In one implementation, vibrator 250 may vibrate at varying frequencies and intensities. Vibrator 270 may vibrate to indicate an incoming call or message, or to provide a tactile feedback to a user. In one implementation, vibrator 250 may operate in conjunction with display 140, overlay 115 and/or key registration unit 240 for providing precision input capability. For example, vibrator 250 may provide feedback to a user of device 100 relating to key registration.

### EXEMPLARY METHODS

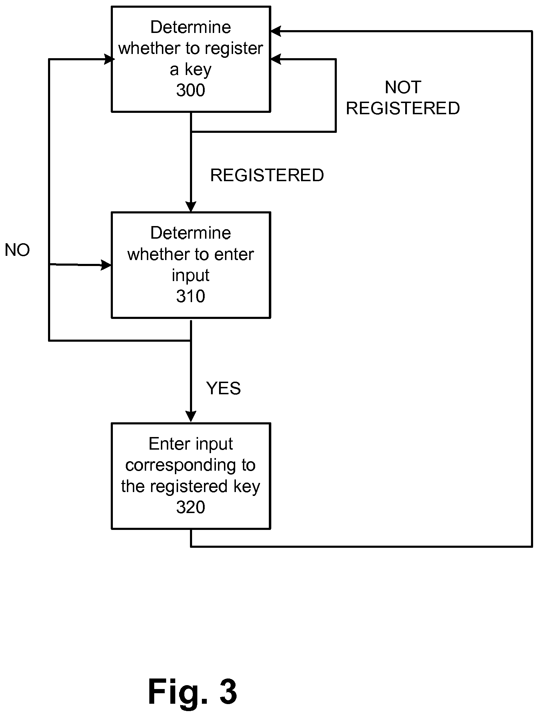

Fig. 3 depicts a flow chart of a first exemplary process for providing precision input capability based on the registration of a single key that has associated with it only a single eligible input (e.g., only one letter, character, or number being associated with the key).

The exemplary process may begin with a determination of whether a key has been registered (block 300). In one implementation, key registration unit 240 may determine whether to register a key based on one or more criteria relating to a first sensitivity of a key of an input device, such as keypad 110, overlay 115, display 140 and/or control buttons 150. The first sensitivity of a key of the input device may be implementation dependent. For example, in one implementation, the first sensitivity of a key may include a sensitive surface (e.g., an electrically-sensitive surface, an acoustically-sensitive surface, a photosensitive surface, or a pressure sensitive). In another implementation, a threshold-value associated with the criterion of the first sensitivity may be utilized to determine whether to register a key. As illustrated in Fig. 3, key registration unit 240 may await for indications that one or more criteria have been satisfied. Key registration unit 240 may provide, for example, a visual, an auditory, and/or a tactile cue to the user to indicate that a key is registered, and more particularly, which key is registered. In this exemplary process, a user may register only one key during any given instant.

A determination may be made whether to enter an input associated with a registered key (block 310). In one implementation, key registration unit 240 may determine whether to enter an input associated with the registered key based a second sensitivity of a key of the input device. For example, the second sensitivity of a key may be associated with a sensitive surface (e.g., an electrically-sensitive surface, an acoustically-sensitive surface, a photosensitive surface, or a pressure sensitive). In another implementation, the criterion may include a threshold-value that is used to determine whether to enter the input associated with the registered key.

In some implementations, the second sensitivity of the key may be different than the first sensitivity of the key. In other implementations, the second sensitivity of the key may be the same as the first sensitivity of the key. In one implementation, the user may stimulate the second sensitivity of the registered key with an instrument in order to enter the input. In the main embodiment of the inventions the user may stimulate the second sensitivity of a key other than the registered key (e.g., a designated key) to enter the input of the registered key. As illustrated in Fig. 3, key registration unit 240 may continually await for indications that one or more criteria have been satisfied.

Input corresponding to the registered key may be entered (block 320). In one implementation, key registration unit 240 may enter the input associated with the registered key when one or more criteria relating to the second sensitivity of the key have been satisfied (block 310). Key registration unit 240 may provide, for example, a visual, an auditory, and/or a tactile cue to the user to indicate the eligible input associated with the registered key is entered.

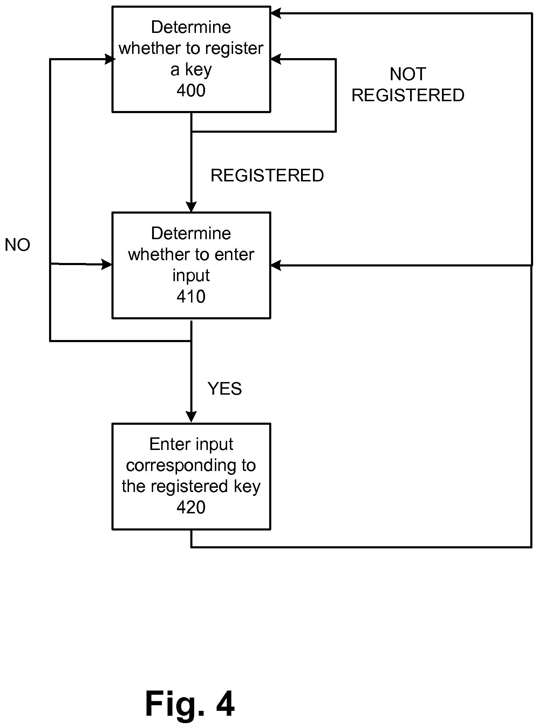

Fig. 4 depicts a flow chart of a second exemplary process for permitting precision input into a device based on multiple keys registration with each key having one eligible input.

The exemplary process may begin with a determination of whether a key has been registered (block 400). In one implementation, key registration unit 240 may determine whether to register a key based on one or more criteria relating to a first sensitivity of a key of an input device, such as keypad 110, overlay 115, display 140 and/or control buttons 150. The first sensitivity of a key of the input device may be implementation dependent. For example, the first sensitivity of a key may be associated with a sensitive surface (e.g., an electrically-sensitive surface, an acoustically-sensitive surface, a photosensitive surface, or a pressure sensitive). In some implementations, a threshold-value associated with the criterion of the first sensitivity may be utilized to determine whether to register a key. As illustrated in Fig 4., key registration unit 240 may await for indications that one or more criteria have been satisfied. Key registration unit 240 may provide, for example, a visual, an auditory, and/or a tactile cue to the user to indicate that a key is registered, and more particularly, which key is registered.

A determination may be made whether to enter the input (block 410). In one implementation, key registration unit 240 may determine whether to enter an input associated with the registered key based on one or more criteria relating to a second sensitivity of a key of the input device. For example, the second sensitivity of a key may be associated with a sensitive surface (e.g., an electrically-sensitive surface, an acoustically-sensitive surface, a photosensitive surface, or a pressure sensitive). A threshold-value associated with the criterion of the second sensitivity may, in some implementations, be utilized to determine whether to enter the input associated with the registered key.

In one implementation, the second sensitivity associated with a key may be different than the first sensitivity associated with the key. In another implementation, the second sensitivity associated with the key may be the same as the first sensitivity associated with the key. The user may stimulate the second sensitivity of the registered key to enter the input. In the main embodiment of the invention the user may stimulate the second sensitivity of a key other than the registered key (e.g., a designated key) to enter the input of the registered key. As illustrated in Fig. 4, key registration unit 240 may wait for indications that one or more criteria have been satisfied in order to enter the input of a registered key. As illustrated in Fig. 4, when a key is registered, the user may press a key so as to enter the input corresponding to the registered key, or the user may register any key.

Input corresponding to the registered key may be entered (block 420). In one implementation, key registration unit 240 may enter the input associated with the registered key when one or more criteria relating to the second sensitivity of the key have been satisfied (block 310). Key registration unit 240 may provide, for example, a visual, an auditory, and/or a tactile cue to the user to indicate the eligible input associated with the registered key is entered.

Since more than one key may be registered during any instant, entering input corresponding to the registered key may include determining which key's second sensitivity is stimulated. In one implementation, when a registered key's second sensitivity is stimulated, key registration unit 240 may enter the input corresponding to the registered key. Alternatively, or additionally, when a designated key's (e.g, an ENTER key) second sensitivity is stimulated, key registration unit 240 may enter the input corresponding to a first registered key. Alternatively, or additionally, when any key's second sensitivity is stimulated, key registration unit 240 may enter the input corresponding to the first registered key. In one implementation, the visual, the auditory, and/or the tactile cue to the user to indicate that an input associated with the registered key has been entered, may be different than, the visual, the auditory, and/or the tactile cue to the user to indicate a key is registered, but the input associated with the registered key has not been entered. For example, in one implementation, a visual cue, such as blinking, may be displayed on display 140 to distinguish a registered key whose corresponding input is not entered from, a registered key whose corresponding input is entered. As another example, various mechanical cues may be employed to distinguish a registered key whose corresponding input is not entered, from a registered key whose corresponding input is entered. For example, various frequencies of vibration may be utilized.

As illustrated in Fig. 4, when the input is entered, key registration unit 240 may determine whether to register a key and/or determine whether to enter input.

### EXAMPLE

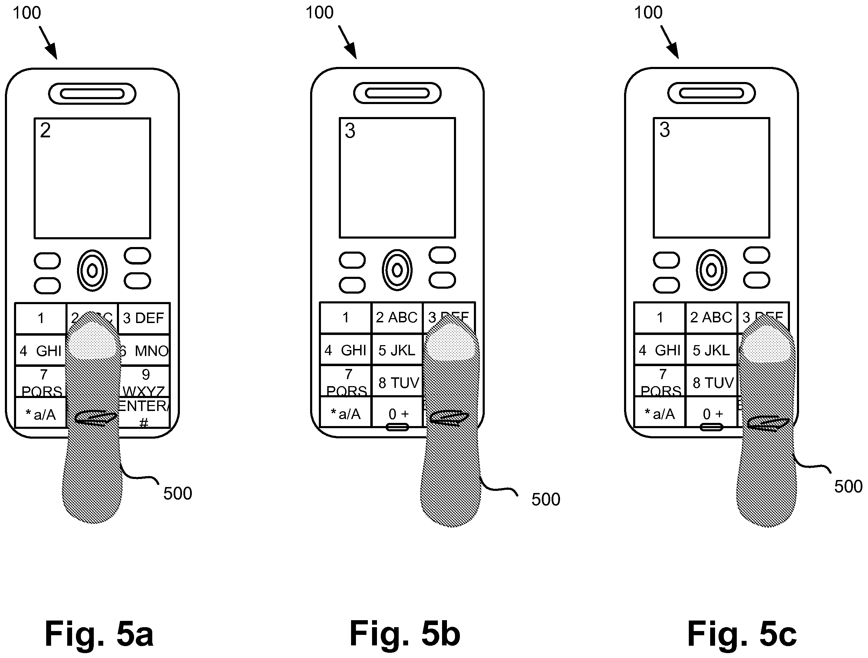

Figs. 5a - 5j are diagrams that depict examples of exemplary processes for providing precision input capability from a user's perspective. In Figs. 5a - 5c, the user is operating device 100 in phone mode. Assume that the user is entering a phone number. The user operates keypad 110 by using his/her finger 500. Touch overlay 115 may be in contact with or reside on the surface of keypad 110. Since the user is using only one finger 500, touch overlay 115 may detect this fact and may register only one key at a time.

As illustrated in Fig. 5a, user's finger 500 touches an area of the overlay corresponding to the 2 key. In response to the touch, key registration unit 240 indicates that the 2 key is registered by displaying on display 140 the number 2. In Fig. 5b, the user realizes that he/she registered an incorrect number, so user's finger 500 touches the 3 key. Thus, the 3 key is registered in place of the 2 key. Since the user wishes to have the number 3 key entered as input, user's finger 500 presses the 3 key, as depicted in Fig. 5c.

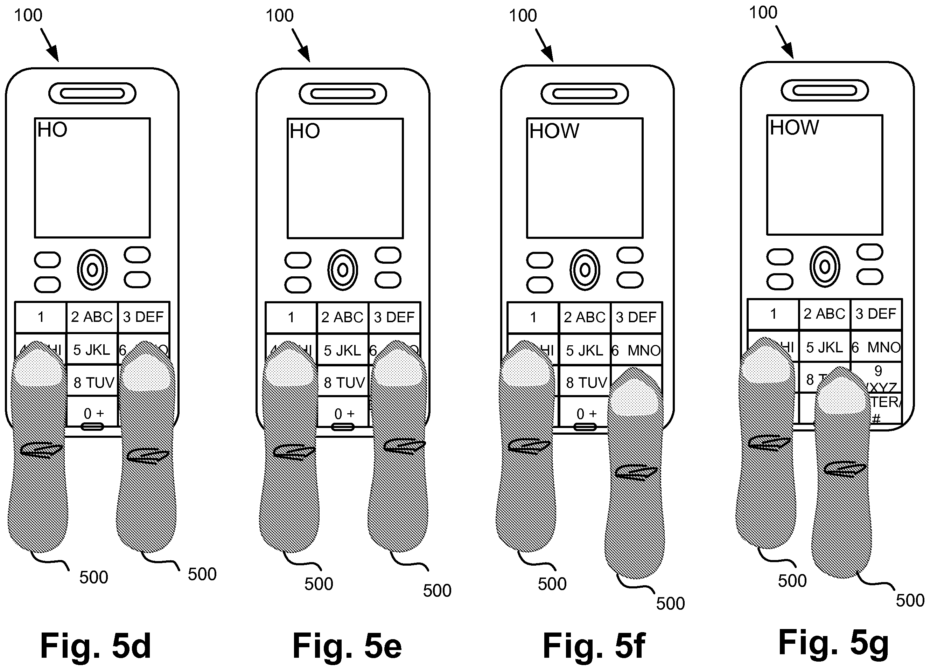

In Figs. 5d - 5g, the user is operating device 100 in text mode. Assume that the user is entering a text message, such as "HOW" using two fingers. Since the user is using two fingers 500, touch overlay may detect this fact and may register two keys at one time. As illustrated in Fig. 5d, user's fingers 500 touches an area of overlay 115 corresponding to the GHI key and the MNO key. As illustrated, key registration unit 240 indicates that the letters "H" and "O" are registered by displaying on display 140 the letters "H" and "O." In Fig. 5e, the user may press the GHI key and the MNO key to enter the input of letters "H" and "O." In Fig. 5f, user's finger 500 may touch the WXYZ key, and the letter "W" may be registered. As illustrated in Fig. 5g, user's finger 500 accidentally presses the TUV key to enter into input the letter "W."

### CONCLUSION

The foregoing description of exemplary embodiments provides illustration and description, but is not intended to be exhaustive or to limit the invention to the precise form disclosed. Modifications and variations are possible in light of the above teachings or may be acquired from practice of the invention. For example, the user may register a key by pressing the key, and may enter the input corresponding to the registered key by touching the key. The sensitivities discussed above in relation to the first phase (e.g., registration of a key) and the second phase (e.g., entering the input corresponding to the registered key) are exemplary in nature. Further, as previously discussed, the first sensitivity of a key may be the same and/or different from the second sensitivity of a key. For example, if the first sensitivity of a key is a pressure sensitivity, and the second sensitivity of a key is a pressure sensitivity, device 100 may not include overlay 115.

It should be emphasized that the term "comprises" or "comprising" when used in the specification is taken to specify the presence of stated features, integers, steps, or components but does not preclude the presence or addition of one or more other features, integers, steps, components, or groups thereof.

It will be apparent that aspects, as described above, may be implemented in many different forms of software, firmware, and hardware in the implementations illustrated in the figures. The actual software code or specialized control hardware used to implement these aspects is not limiting of the invention. Thus, the operation and behavior of these aspects were described without reference to the specific software code--it being understood that software and control hardware could be designed to implement these aspects based on the description herein.

No element, act, or instruction used in the present application should be construed as critical or essential to the invention unless explicitly described as such. Also, as used herein, the article "a", "an", and "the" are intended to include one or more items. Where only one item is intended, the term "one" or similar language is used. Further, the phrase "based on" is intended to mean "based, at least in part, on" unless explicitly stated otherwise.

When an element or layer is referred to as being "on" another element or layer, it may be directly on the other element or layer, or an intervening element(s) or an intervening layer(s) may be present. As used herein, the term "and/or" includes any and all combinations of one or more of the associated list items.

## Claims

1. An input device, (110, 115, 140, 150) comprising:
input keys, wherein each key has associated with it a first sensitivity, a second sensitivity, and input information;
key registration logic (240) to:
detect a first stimulus that corresponds to the first sensitivity of a first key of the input keys;
register the first key when the first stimulus corresponding to the first sensitivity of the first key is detected;
detect a second stimulus that corresponds to the second sensitivity; and
input the input information corresponding to the first key when the second stimulus corresponding to the second sensitivity is detected, charaterized in that the second stimulus is of a second key that is a different key than the first key, and
wherein the input information corresponding to the first key is consecutively input again, without re-registering the first key, when the second stimulus is consecutively detected again.

2. The input device (110, 115, 140, 150) of claim 1, wherein the first sensitivity is different than the second sensitivity; and
the first sensitivity or the second sensitivity is at least one of a touch sensitivity or a pressure sensitivity.

3. The input device (110, 115, 140, 150) of claim 1, wherein the key registration logic (240) is further configured to:
input the input information corresponding to the first key when the second stimulus corresponding to the second sensitivity of the first key is detected.

4. The input device (110, 115, 140, 150) of claim 1, wherein the first stimulus corresponds to a threshold value of time of touching the first key.

5. The input device (110, 115, 140, 150) of claim 1, wherein the key registration logic further comprises:
logic to output an indication that the first key is registered.

6. The input device (110, 115, 140, 150) of claim 1, wherein the key registration logic further comprises:
logic to output an indication that the input information is inputted.

7. The input device (110, 115, 140, 150) of claim 1, wherein the first sensitivity or the second sensitivity includes a threshold value of sensitivity.

8. The input device (110, 115, 140, 150), of claim 1, wherein the key registration logic (240) further comprises:
logic to unregister the first key when a first stimulus corresponding to the first sensitivity of another key is detected; and logic to:
determine whether a user is utilizing a plurality of input instruments; and
register the first key and a third key when the first stimulus corresponding to the first sensitivity is detected for each of the first key and the third key, when it is determined that the user is utilizing the plurality of input instruments.

9. A method, comprising:
registering (300,400) a first key of an input device when a first stimulus corresponding to a first sensitivity of the first key is detected;
providing an indication that the first key is registered; and
inputting (320,420) information associated with the first key when a second stimulus corresponding to a second sensitivity of a second key of the input device is detected, **characterized in that** the second key is a different key than the first key, and wherein the input information corresponding to the first key is consecutively input again, without re-registering the first key, when the second stimulus is consecutively detected again.

10. The method of claim 9, further comprising:
providing an indication that the information associated with the first key is inputted.

11. The method of claim 9, further comprising:
inputting (320,420) information associated with the first key when a second stimulus corresponding to a second sensitivity of the first key of the input device is detected.

12. The method of claim 9, wherein the providing the indication that the first key is registered comprises:
providing at least one of a visual feedback, a tactile feedback, or an auditory feedback.

13. The method of claim 12, wherein the visual feedback includes displaying the input information associated with the first key in a blinking fashion.

14. The method of claim 9, wherein the first sensitivity or the second sensitivity is at least one of a touch sensitivity or a pressure sensitivity.

## Patentansprüche

1. Eingabevorrichtung (110, 115, 140, 150), umfassend:
Eingabetasten, wobei jeder Taste eine erste Empfindlichkeit, eine zweite Empfindlichkeit und Eingangsinformation zugeordnet ist;
eine Tastenregistrierungslogik (240), um:
einen ersten Stimulus zu erfassen, der der ersten Empfindlichkeit einer ersten Taste der Eingabetasten entspricht;
die erste Taste zu registrieren, wenn der erste Stimulus erfasst wird, der der ersten Empfindlichkeit der ersten Taste entspricht; einen zweiten Stimulus zu erfassen, der der zweiten Empfindlichkeit entspricht; und
die Eingangsinformation einzugeben, die der ersten Taste entspricht, wenn der zweite Stimulus entsprechend der zweiten Empfindlichkeit erfasst wird,
**dadurch gekennzeichnet, dass**
der zweite Stimulus von einer zweiten Taste ist, die eine andere Taste als die erste Taste ist, und wobei die Eingangsinformation, die der ersten Taste entspricht, konsekutiv wieder eingegeben wird, ohne die erste Taste neu zu registrieren, wenn der zweite Stimulus konsekutiv wieder erfasst wird.

2. Eingabevorrichtung (110, 115, 140, 150) nach Anspruch 1, wobei die erste Empfindlichkeit von der zweiten Empfindlichkeit verschieden ist; und die erste Empfindlichkeit oder die zweite Empfindlichkeit zumindest eine Berührungsempfindlichkeit oder eine Druckempfindlichkeit ist.

3. Eingabevorrichtung (110, 115, 140, 150) nach Anspruch 1, wobei die Tastenregistrierungslogik (240) ferner konfiguriert ist zum:
Eingeben der Eingangsinformation entsprechend der ersten Taste, wenn der zweite Stimulus, der der zweiten Empfindlichkeit der ersten Taste entspricht, erfasst wird.

4. Eingabevorrichtung (110, 115, 140, 150) nach Anspruch 1, wobei der erste Stimulus einem Schwellenwert der Zeitdauer des Berührens der ersten Taste entspricht.

5. Eingabevorrichtung (110, 115, 140, 150) nach Anspruch 1, wobei die Tastenregistrierungslogik ferner umfasst:
eine Logik, um eine Indikation auszugeben, dass die erste Taste registriert ist.

6. Eingabevorrichtung (110, 115, 140, 150) nach Anspruch 1, wobei die Registrierungslogik ferner umfasst:
eine Logik, um eine Indikation auszugeben, dass die Eingangsinformation eingegeben wird.

7. Eingabevorrichtung (110, 115, 140, 150) nach Anspruch 1, wobei die erste Empfindlichkeit oder die zweite Empfindlichkeit einen Schwellenwert der Empfindlichkeit enthält.

8. Eingabevorrichtung (110, 115, 140, 150) nach Anspruch 1, wobei die Tastenregistrierungslogik (240) ferner umfassend:
eine Logik, um die erste Taste aufzuheben, wenn ein erster Stimulus, der der ersten Empfindlichkeit einer anderen Taste entspricht, erfasst wird; und
eine Logik, um:
zu bestimmen, ob ein Benutzer eine Vielzahl von Eingangsinstrumenten verwendet; und
die erste Taste und eine dritte Taste zu registrieren, wenn der erste Stimulus, der der ersten Empfindlichkeit entspricht, für jeden der ersten Taste und der dritten Taste erfasst wird, wenn bestimmt wird, dass der Benutzer die Vielzahl von Eingangsinstrumenten verwendet.

9. Verfahren, umfassend:
Registrieren (300, 400) einer ersten Taste einer Eingabevorrichtung, wenn ein erster Stimulus, der einer ersten Empfindlichkeit der ersten Taste entspricht, erfasst wird;
Bereitstellen einer Indikation, dass die erste Taste registriert ist; und
Eingeben (320, 420) einer Information, die mit der ersten Taste verbunden ist, wenn ein zweiter Stimulus, der einer zweiten Empfindlichkeit einer zweiten Taste der Eingabevorrichtung entspricht, erfasst wird,
**dadurch gekennzeichnet, dass**
die zweite Taste eine andere Taste als die erste Taste ist, und wobei die Eingangsinformation, die der ersten Taste entspricht, konsekutiv wieder eingegeben wird, ohne die erste Taste neu zu registrieren, wenn der zweite Stimulus konsekutiv wieder erfasst wird.

10. Verfahren nach Anspruch 9, ferner umfassend:
Bereitstellung einer Indikation, dass die Information, die der ersten Taste zugeordnet ist, eingegeben ist.

11. Verfahren nach Anspruch 9, ferner umfassend:
Eingeben (320, 420) einer Information, die der ersten Taste zugeordnet ist, wenn ein zweiter Stimulus entsprechend einer zweiten Empfindlichkeit der ersten Taste der Eingabevorrichtung erfasst wird.

12. Verfahren nach Anspruch 9, wobei die Bereitstellung der Indikation, dass die erste Taste registriert ist, umfasst:
Bereitstellen von mindestens einer visuellen Rückmeldung, einer taktilen Rückmeldung oder einer auditiven Rückmeldung.

13. Verfahren nach Anspruch 12, wobei die visuelle Rückmeldung das Anzeigen der der ersten Taste zugeordneten Eingangsinformation in einer blinkenden Weise umfasst.

14. Verfahren nach Anspruch 9, wobei die erste Empfindlichkeit oder die zweite Empfindlichkeit mindestens eine Berührungsempfindlichkeit oder eine Druckempfindlichkeit ist.

## Revendications

1. Dispositif d'entrée (110, 115, 140, 150) comprenant :
des touches d'entrée, dans lesquelles chaque touche possède, associées à celle-ci, une première sensibilité, une deuxième sensibilité et des informations d'entrée ;
une logique d'enregistrement de touche (240) pour :
détecter un premier stimulus qui correspond à la première sensibilité d'une première touche des touches d'entrée ;
enregistrer la première touche lorsque le premier stimulus correspondant à la première sensibilité de la première touche est détecté ;
détecter un deuxième stimulus qui correspond à la deuxième sensibilité ; et
entrer les informations d'entrée correspondant à la première touche lorsque le deuxième stimulus correspondant à la deuxième sensibilité est détecté, **caractérisé en ce que**
le deuxième stimulus est d'une deuxième touche qui est une touche différente de la première touche, et
dans lequel les informations d'entrée correspondant à la première touche sont à nouveau entrées consécutivement, sans réenregistrement de la première touche, lorsque le deuxième stimulus est à nouveau détecté consécutivement.

2. Dispositif d'entrée (110, 115, 140, 150) selon la revendication 1, dans lequel la première sensibilité est différente de la deuxième sensibilité ; et
la première sensibilité ou la deuxième sensibilité est au moins l'une d'une sensibilité au toucher ou d'une sensibilité à la pression.

3. Dispositif d'entrée (110, 115, 140, 150) selon la revendication 1, dans lequel la logique d'enregistrement de touche (240) est conçue en outre pour :
entrer les informations d'entrée correspondant à la première touche lorsque le deuxième stimulus correspondant à la deuxième sensibilité de la première touche est détecté.

4. Dispositif d'entrée (110, 115, 140, 150) selon la revendication 1, dans lequel le premier stimulus correspond à une valeur seuil de temps de toucher de la première touche.

5. Dispositif d'entrée (110, 115, 140, 150) selon la revendication 1, dans lequel la logique d'enregistrement de touche comprend en outre :
une logique pour produire en sortie une indication que la première touche est enregistrée.

6. Dispositif d'entrée (110, 115, 140, 150) selon la revendication 1, dans lequel la logique d'enregistrement de touche comprend en outre :
une logique pour produire en sortie une indication que les informations d'entrée sont entrées.

7. Dispositif d'entrée (110, 115, 140, 150) selon la revendication 1, dans lequel la première sensibilité ou la deuxième sensibilité inclut une valeur seuil de sensibilité.

8. Dispositif d'entrée (110, 115, 140, 150) selon la revendication 1, dans lequel la logique d'enregistrement de touche (240) comprend en outre :
une logique pour désenregistrer la première touche lorsqu'un premier stimulus correspondant à la première sensibilité d'une autre touche est détecté ; et
une logique pour :
déterminer si un utilisateur est en train d'utiliser une pluralité d'instruments d'entrée ; et
enregistrer la première touche et une troisième touche lorsque le premier stimulus correspondant à la première sensibilité est détecté pour chacune de la première touche et de la troisième touche, lorsqu'il est déterminé que l'utilisateur est en train d'utiliser la pluralité d'instruments d'entrée.

9. Procédé, comprenant :
l'enregistrement (300, 400) d'une première touche d'un dispositif d'entrée lorsqu'un premier stimulus correspondant à une première sensibilité de la première touche est détecté ;
la fourniture d'une indication que la première touche est enregistrée ; et
l'entrée (320, 420) d'informations associées à la première touche lorsqu'un deuxième stimulus correspondant à une deuxième sensibilité d'une deuxième touche du dispositif d'entrée est détecté, **caractérisé en ce que**
la deuxième touche est une touche différente de la première touche, et dans lequel les informations d'entrée correspondant à la première touche sont à nouveau entrées consécutivement, sans réenregistrement de la première touche, lorsque le deuxième stimulus est à nouveau détecté consécutivement.

10. Procédé selon la revendication 9, comprenant en outre :
la fourniture d'une indication que les informations associées à la première touche sont entrées.

11. Procédé selon la revendication 9, comprenant en outre :
l'entrée (320, 420) d'informations associées à la première touche lorsqu'un deuxième stimulus correspondant à une deuxième sensibilité de la première touche du dispositif d'entrée est détecté.

12. Procédé selon la revendication 9, dans lequel la fourniture de l'indication que la première touche est enregistrée comprend :
la fourniture d'au moins l'un d'un retour visuel, d'un retour tactile, ou d'un retour auditif.

13. Procédé selon la revendication 12, dans lequel le retour visuel inclut l'affichage des informations d'entrée associées à la première touche d'une façon clignotante.

14. Procédé selon la revendication 9, dans lequel la première sensibilité ou la deuxième sensibilité est au moins l'une d'une sensibilité au toucher ou d'une sensibilité à la pression.
